# EUROPÄISCHE PATENTSCHRIFT

(11) **EP 1 714 542 B1**
(45) Veröffentlichungstag und Bekanntmachung des Hinweises auf die Patenterteilung: **02.04.2008**
(21) Anmeldenummer: 06112527.4
(22) Anmeldetag: 12.04.2006
(51) Int. Cl.: A01D 41/127

(54) **Korntank mit einem Entfernungsmesser zur Erfassung des Füllstands**
Grain tank with distance sensor for measuring the grain level
Bac à grain avec détecteur de distance pour mésurer le niveau des grains

(30) Priorität: 20.04.2005 DE 102005018141
(43) Veröffentlichungstag der Anmeldung: 25.10.2006
(73) Patentinhaber: Deere & Company, Moline, IL 61265-8098 (US)
(72) Erfinder: Klimmer, Torsten, 66482, Zweibrücken (DE)
(74) Vertreter: Holst, Sönke

(56) Entgegenhaltungen:
- DE-A1- 3 812 293
- DE-A1- 10 051 096
- US-A- 5 282 389
- US-A- 6 074 298

## Beschreibung

Die Erfindung betrifft einen Korntank für einen Mähdrescher mit einem zwischen einer geschlossenen und geöffneten Position bewegbaren Korntankaufsatz, der in der geschlossenen Position den Korntank nach oben hin abdeckt und in der geöffneten Position das nutzbare Volumen des Korntanks nach oben hin erweitert, und mit einem Sensor zur Erfassung des Füllstands im Korntank, welcher derart angebracht ist, dass er sich bei geöffnetem Korntankaufsatz in einer zur Erfassung des Füllstands des Füllguts geeigneten Position oberhalb des maximalen Füllstands des Füllguts befindet, während er bei geschlossenem Korntankaufsatz durch diesen abgedeckt ist.

### Stand der Technik

Mähdrescher sind Maschinen, die sich über ein Feld bewegen, um dort angebaute Körnerfrüchte abzuernten, zu dreschen und zu reinigen, um das Korn von den Erntegutresten zu trennen. Das gereinigte Korn wird in einem Korntank zwischengespeichert und bei hinreichend gefülltem Korntank auf ein Transportfahrzeug überladen. Der Bediener oder eine zu diesem Zweck vorgesehene Steuerung benötigt eine Information über den Füllstand des Korntanks, um bei gefülltem Korntank das Transportfahrzeug durch Abgabe geeigneter Signale veranlassen zu können, an den Mähdrescher heranzufahren und das Korn zu übernehmen. Außerdem kann der Füllstand des Korntanks zur Ertragsmessung oder Ertragskartierung erfasst werden.

In der US 5 282 389 A und der WO 00/35265 A wird jeweils vorgeschlagen, den Füllstand des Korntanks eines Mähdreschers mit einem Ultraschallsensor zu erfassen. Einzelheiten über die Anbringung des Ultraschallsensors werden nicht offenbart.

Die US 5 957 773 A beschreibt einen Versuchsmähdrescher, bei dem das gereinigte Korn in einen Testbehälter geleitet wird. Der Füllstand des Korns wird durch einen an der Oberseite etwa mittig im Testbehälter starr angeordneten Ultraschallsensor erfasst.

In der DE 100 51 096 A wird ein Mähdrescher mit einem schließbaren Korntankaufsatz zur Vergrößerung des Volumens des Korntanks beschrieben.

Die als gattungsbildend angesehene US 6 074 298 A beschreibt einen Mähdrescher mit einem Korntankaufsatz, dessen Seitenwände zwischen einer nach außen verschwenkten Betriebsstellung und einer horizontalen Transportstellung verschwenkbar sind, in der sie den Rand des Korntanks des Mähdreschers nach oben abdecken. An der Innenseite einer Seitenwand ist ein mechanischer Kontrollschalter für den Füllstand innerhalb des Korntankaufsatzes angebracht.

### Aufgabe der Erfindung

Die der Erfindung zu Grunde liegende Aufgabe wird darin gesehen, eine geeignete Anbringung für einen Ultraschallsensor in einem Korntank zwecks Erfassung des Füllstands bereitzustellen.

Diese Aufgabe wird erfindungsgemäß durch die Lehre des Patentanspruchs 1 gelöst, wobei in Anspruch 2 Merkmale aufgeführt sind, die die Lösung in vorteilhafter Weise weiterentwickeln.

Ein Korntank für einen selbst fahrenden Mähdrescher weist einen Korntankaufsatz auf, der zwischen einer geschlossenen Position und einer geöffneten Position bewegbar ist. Ein berührungslos arbeitender Entfernungsmesser dient zur Erfassung des Füllstands des Korntanks. Er ist derart mit dem Korntankaufsatz gekoppelt, dass er durch den Korntankaufsatz nach oben hin abgedeckt und gegen Umgebungseinflüsse geschützt wird, wenn der Korntankaufsatz sich in der geschlossenen Position befindet. Befindet sich der Korntankaufsatz in der geöffneten Position, in der er den Korntank nach oben hin erweitert, gelangt der Entfernungsmesser in eine Position oberhalb des maximalen Füllstands, so dass er den Füllstand des Korntanks auch dann erfassen kann, wenn nicht nur der Korntank, sondern auch das durch den Korntankaufsatz erweiterte Volumen zur Aufnahme von Füllgut genutzt wird. Eine in den Korntank ragende Korntankbefülleinrichtung (in der Regel eine Korntankbefüllschnecke) ist zwischen einer ausgefahrenen Position und einer eingefahrenen Position bewegbar und haltert den Entfernungsmesser. Die Korntankbefülleinrichtung bewegt sich in der Regel synchron mit dem Korntankaufsatz, so dass sich die Korntankbefülleinrichtung in der eingefahrenen (ausgefahrenen) Position befindet, wenn der Korntankaufsatz in der geschlossenen (geöffneten) Position ist. Vorzugsweise wird der zum Bewegen der Korntankbefülleinrichtung dienende Aktor auch zum Bewegen des Korntankaufsatzes genutzt. Es wäre aber auch denkbar, unabhängige Aktoren für die Korntankbefülleinrichtung und den Korntankaufsatz zu verwenden.

Der Entfernungsmesser arbeitet vorzugsweise mit elektromagnetischen Wellen, wie Radiowellen (Radar) oder Licht (Laser), wobei interferometrische Techniken zum Einsatz kommen können. Alternativ oder zusätzlich werden vom Entfernungsmesser akustische Wellen, z. B. Ultraschall, abgestrahlt und von der Oberfläche des Füllguts reflektierte Wellen empfangen. Der Entfernungsmesser bestimmt anhand der Laufzeit und/oder Intensität der vom Füllgut reflektierten Wellen die Entfernung zwischen ihm und der Oberfläche des Füllguts. Im Fall der Verwendung akustischer Wellen zur Entfernungsmessung kann die aktuelle Umgebungstemperatur erfasst und berücksichtigt werden, um die Messgenauigkeit zu verbessern. Aus dem ermittelten Abstand kann durch eine geeignete Rechnereinrichtung der Füllstand (Füllhöhe und/oder Füllvolumen) abgeleitet und angezeigt und/oder abgespeichert werden. Es können an sich bekannte Techniken (s. DE 38 12 293 C, deren Offenbarung durch Verweis mit in die vorliegenden Unterlagen aufgenommen wird) verwendet werden, um Messfehler durch sich bewegendes Füllgut, das von einer Korntankbefülleinrichtung in den Korntank ausgeworfen wird und Wellen zum Entfernungsmesser hin reflektiert, zu verringern. Ebenso wäre es denkbar, durch eine geeignete Auswertung, die füllstandsabhängig sein kann, Reflexionen an der Geometrie des Korntanks zu kompensieren.

### Ausführungsbeispiel

In den Zeichnungen ist ein nachfolgend näher beschriebenes Ausführungsbeispiel dargestellt. Es zeigt:
- Fig. 1: eine schematische Ansicht eines Mähdreschers mit einem Korntank und einem Korntankaufsatz,
- Fig. 2: eine perspektivische Ansicht des Korntankaufsatzes in seiner geöffneten Position,
- Fig. 3: eine perspektivische Ansicht des Korntankaufsatzes in seiner geschlossenen Position,
- Fig. 4: eine teilgeschnittene Ansicht des Korntanks und des geöffneten Korntankaufsatzes mit einer Messeinrichtung zur Erfassung des Füllstands, und
- Fig. 5: die Ansicht aus Figur 4 mit geschlossenem Korntankaufsatz.

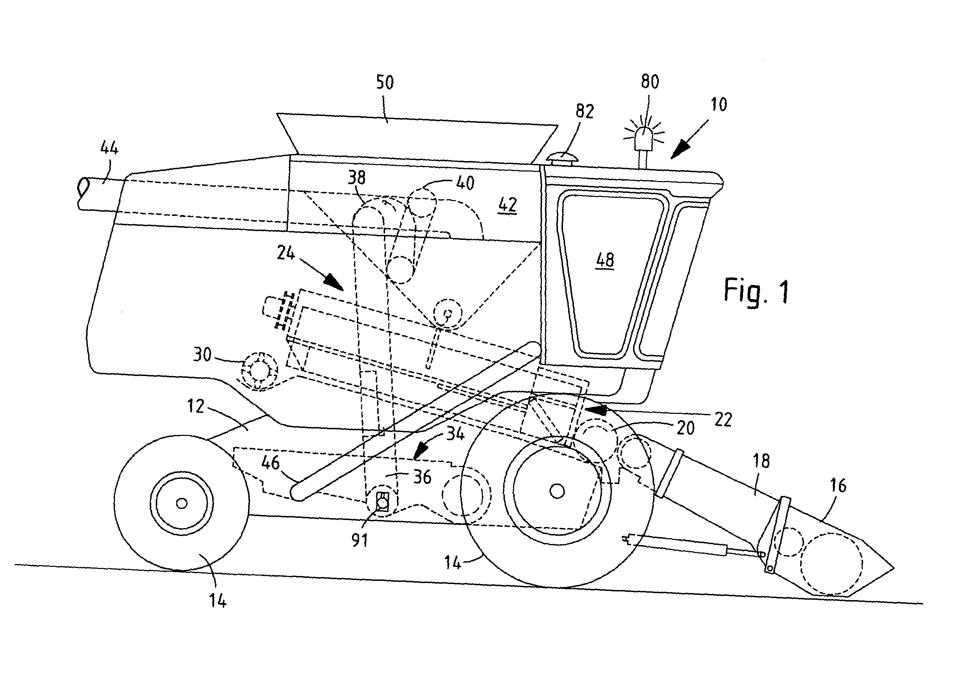

Die Figur 1 zeigt einen landwirtschaftlichen Mähdrescher 10 mit einem Chassis 12 und sich von diesem erstreckenden Bodenlaufrädern 14. Eine Erntegutbergungsvorrichtung 16 wird verwendet, Erntegut aufzunehmen und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlassübergangsbereich 22 an eine Axialtrennvorrichtung 24 weiter. Obwohl die Erfindung im Zusammenhang mit einem Axialmähdrescher beschrieben wird, kann sie auch an anderen Typen von Mähdreschern verwendet werden, wie an konventionellen Strohschüttler-Mähdreschern oder an Hybrid-Mähdreschern mit einer Dreschtrommel und einer nachgeschalteten Rotortrennvorrichtung. Im Folgenden beziehen sich Richtungsangaben, wie vorn, hinten, oben und unten auf die Vorwärtsbewegungsrichtung des Mähdreschers 10.

Das Erntegut wird in der Axialtrennvorrichtung 24 gedroschen und separiert. Korn wird dabei aus der Erntegutmatte gelöst und fällt gemeinsam mit ungedroschenen Getreideähren, Spreu und anderem Erntegutmaterial durch den Dreschkorb und das Rost, die unterhalb der Axialtrennvorrichtung 24 angebracht sind, in ein Reinigungssystem 34. Größere Erntegutreste werden an der Rückseite der Axialtrennvorrichtung 24 durch eine Abgabetrommel 30 ausgestoßen.

Das Reinigungssystem 34 ist mit einem Gebläse ausgestattet, das Spreu zur Rückseite des Mähdreschers 10 heraus bläst. Das schwerere saubere Korn wird durch einen quer eingebauten Schneckenförderer für sauberes Korn einem Paddel-Elevator 36 für sauberes Korn zugeführt. Der Paddel-Elevator 36 leitet das Korn aufwärts in ein Übergangsgehäuse 38, in dem das Korn einer Förderschnecke 40 zum Beladen eines Korntanks 42 für sauberes Korn zugeführt wird. Das Korn wird bei Erreichen eines hinreichenden Füllstands aus dem Korntank 42 durch einen Entladeschneckenförderer 44 entfernt. Der Betrieb des Mähdreschers 10 wird von einer Bedienerkabine 48 aus gesteuert.

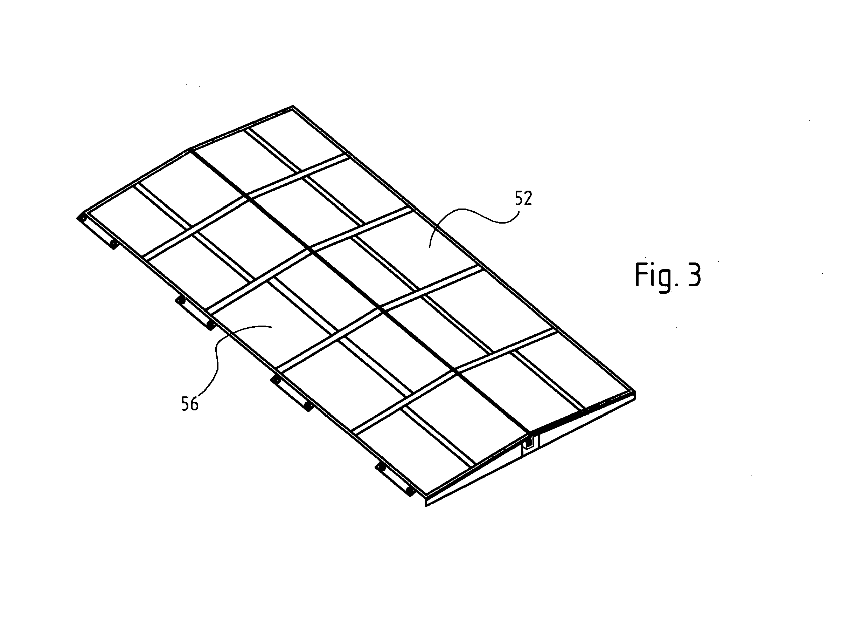

An der Oberseite des nach oben offenen Korntanks 42 ist ein Korntankaufsatz 50 angebracht. In den Figuren 1, 2, 4, 6 und 8 ist der Korntankaufsatz 50 in seiner geöffneten Position, d. h. seiner Betriebsstellung dargestellt, während er sich in den Figuren 3, 5 und 7 in seiner geschlossenen Position befindet.

Der Korntankaufsatz 50 umfasst eine in Vorwärtsfahrtrichtung des Mähdreschers 10 vordere Wand 52, die aus in sich starrem Material hergestellt ist, in der dargestellten Ausführungsform aus mit quer und längs verlaufenden Rippen 54 verstärktem Blech. Der Korntankaufsatz 50 weist außerdem eine hintere Wand 56 auf, die mit der vorderen Wand 52 identisch ist. Zu den beiden Seiten des Mähdreschers 10 hin ist der Korntankaufsatz 50 mit Seitenwänden 58 und 60 aus flexiblem Material versehen, z. B. gummiertem Gewebe. Die Seitenwände 58, 60 sind an ihren seitlichen Enden mit der vorderen Wand 52 und der hinteren Wand 56 und am unteren Ende mit der Wand des Korntanks 42 verbunden. Die vordere Wand 52 und die hintere Wand 56 sind an ihren Unterseiten um horizontale, quer zur Fahrtrichtung des Mähdreschers 10 verlaufende Achsen schwenkbar an den Wänden des Korntanks 42 befestigt. Die vordere Wand 52, die hintere Wand 56 und die Seitenwände 58, 60 bilden in der Betriebsstellung somit einen trichterartigen, ringförmigen und nach oben offenen Behälter.

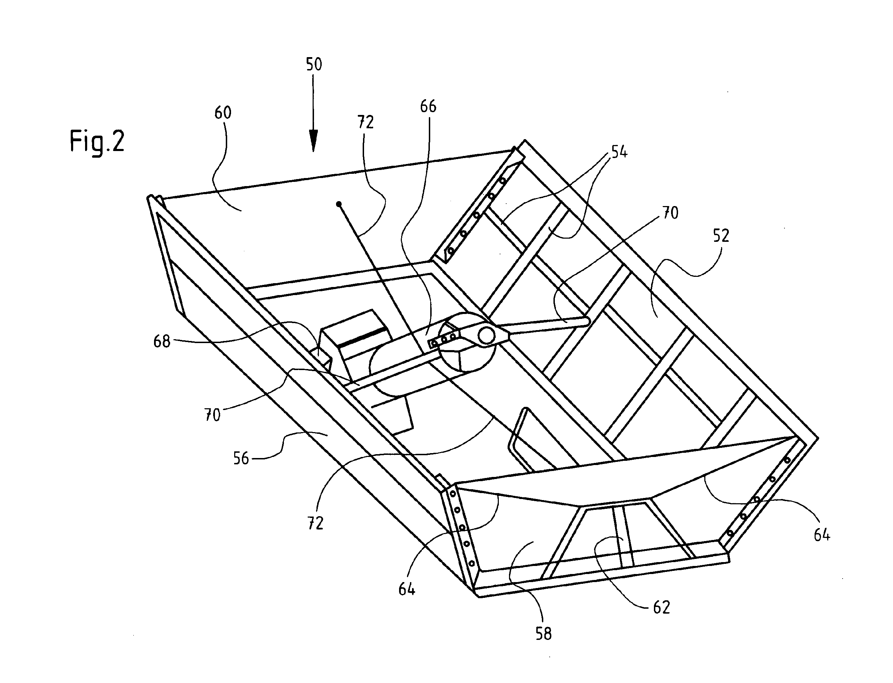

An den Außenflächen der Seitenwände 58, 60 aus flexiblem Material ist jeweils ein Stützelement 62 in Form eines nach unten geöffneten Bogens mit einer mittleren, senkrechten Querstrebe angeordnet (das der linken Seitenwand 60 zugeordnete Stützelement ist in Figur 2 nicht sichtbar). Die Stützelemente 62 sind durch an den Außenflächen der Seitenwände 58, 60 anliegende Seile 64 mit den oberen Ecken der vorderen Wand 52 und der hinteren Wand 56 verbunden. Die Stützelemente 62 sind an ihren unteren Enden um horizontale, parallel zur Fahrtrichtung des Mähdreschers 10 verlaufende Achsen schwenkbar an der Wand des Korntanks 42 angelenkt. Sie sind - zwecks Abstützung der Seitenwände 58, 60 - aber nur maximal um 90° nach oben, jedoch nicht weiter verschwenkbar.

Eine die Förderschnecke 40 enthaltendes Korntankbefülleinrichtung in Form eines Befüllrohrs 66 ist im Inneren des Korntanks 42 angeordnet und transportiert den ausgedroschenen Gutanteil vom Reinigungssystem 34 in den Korntank 42. Das Befüllrohr 66 ist durch eine Antriebseinrichtung 68, die einen Hydraulik- oder Elektromotor umfasst, zwischen einer in Figur 2 gezeigten ausgefahrenen Position, in der sich das Befüllrohr 66 um einen Winkel von etwa 45° nach oben erstreckt, und einer eingefahrenen Position verschwenkbar, in der das Befüllrohr 66 nach unten in den Innenraum des Korntanks 42 hinein abgesenkt ist und sich nur noch um etwa 20° nach oben erstreckt. In der ausgefahrenen Position ist die Auslassöffnung am oberen Ende des Befüllrohres 66 innerhalb des von den Seitenwänden 52, 56, 58 und 60 des Korntankaufsatzes 50 gebildeten Rings angeordnet. Der Korntankaufsatz 50 kann somit bis zum oberen Rand mit Erntegut gefüllt werden.

Das Befüllrohr 66 ist durch jeweils ein stangenförmiges, Zug- und Druckkräfte übertragendes Verbindungselement 70 mit der vorderen Wand 52 und der hinteren Wand 56 verbunden. Das Verbindungselement 70 ist durch geeignete Gelenke am Befüllrohr 66 und der jeweiligen Wand 52, 56 angelenkt. Wird das Befüllrohr 66 durch die Antriebseinrichtung 68 von der in Figur 2 dargestellten ausgefahrenen Position in die eingefahrene Position verbracht, so bewirken die Verbindungselemente 70, dass die vordere Wand 52 und die hintere Wand 56 in Richtung auf das Innere des Korntanks 42 zu einschwenken. Durch die mit der vorderen Wand 52 bzw. hinteren Wand 56 verbundenen, sich nunmehr entspannenden Seile 64 werden die Stützelemente 62 nach innen geklappt, unterstützt durch Seile 72, die jeweils zwischen einer Seitenwand 58, 60 und dem Befüllrohr 66 gespannt sind. Dadurch werden die Seitenwände 58, 60 eingefaltet. Die Seile 72 sind mit den Stützelementen 62 verbunden und stützen sie und die Seitenwände 58, 60 in der Betriebsstellung ab, was sich insbesondere dann als sinnvoll erweist, wenn der Korntankaufsatz 50 befüllt ist.

Die vordere Wand 52 und die hintere Wand 56 bilden in der geschlossenen Stellung, wie sie in der Figur 3 dargestellt ist, einen geschlossenen Deckel für den Korntank 42, der ihn und die Seitenwände 58, 60 vor Umwelteinflüssen schützt.

Das Verbringen des Korntankaufsatzes 50 in die ausgefahrene Position erfolgt analog. Das Befüllrohr 66 wird durch die Antriebseinrichtung 68 angehoben, so dass die Verbindungselemente 70 die vordere Wand 52 und die hintere Wand 56 um etwa 120° aufschwenken, bis die Seile 64 gespannt sind. Durch die sich spannenden Seile 64 werden die Stützelemente 62 etwa um 90° nach außen in die Betriebsposition verschwenkt. Die Seile 64 begrenzen auch den Schwenkweg der Stützelemente 62. Die Seitenwände 58, 60 sind durch geeignete Befestigungsmittel mit den Stützelementen 62 verbunden, so dass auch sie in die Betriebsstellung gelangen.

Anzumerken ist, dass der Korntankaufsatz 50 auch gegenüber der dargestellten Ausführungsform um 90° gedreht sein könnte, d. h. mit sich quer zur Fahrtrichtung erstreckenden flexiblen Seitenwänden 58, 60. Die Seitenwände 58, 60 müssen auch nicht unbedingt aus flexiblem Material sein, sondern können aus starrem Material, z. B. Blech sein (s. DE 40 16 319 C, DE 44 45 933 A).

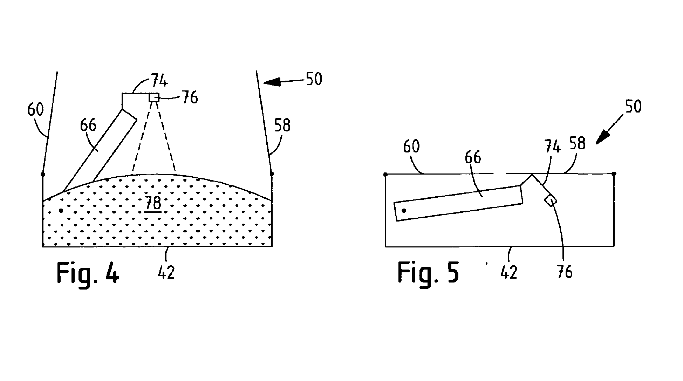

In der Figur 4 ist der Korntank 42 und der geöffnete Korntankaufsatz 50 in einer teilgeschnittenen, von hinten betrachteten Ansicht dargestellt. Am oberen Ende des Befüllrohrs 66 ist eine Halterung 74 starr befestigt, die einen Entfernungsmesser 76 starr haltert. Der Entfernungsmesser 76 strahlt im Betrieb Ultraschallwellen auf die Oberfläche des im Korntank 42 bzw. im Korntankaufsatz 50 enthaltenen Füllguts (Korn) ab und empfängt die von der Oberfläche reflektierten Wellen. Anhand der Laufzeit und/oder Intensität der reflektierten Wellen wird durch eine Rechnereinrichtung (nicht gezeigt) der Füllstand im Korntank 42 bestimmt und dem Bediener in der Kabine 48 durch eine Ausgabeeinrichtung optisch oder akustisch angegeben. Zur Übertragung der Daten hinsichtlich der Füllhöhe an eine Anzeigeeinrichtung in der Kabine 48 bietet sich die Verwendung eines Datenübertragungsbusses (CAN) an. Es wäre zusätzlich oder alternativ denkbar, beim Erreichen eines vorbestimmten Füllstands ein Signal bereitzustellen, das dem Bediener gegeben, zur Ansteuerung einer Signalleuchte 80 verwendet und/oder drahtlos an ein Transportfahrzeug übersandt wird. Der Füllstand bzw. eine daraus abgeleitete Größe, wie das Füllvolumen oder (bei bekannter Dichte des Ernteguts) die Masse des Ernteguts kann auch zu Zwecken der Präzisionslandwirtschaft georeferenziert abgespeichert werden, wozu eine Satellitenantenne 82 zum Empfang von Signalen eines Positionsbestimmungssystems vorgesehen ist.

Wird das Befüllrohr 66 in die eingefahrene Position verbracht, wie in der Figur 5 dargestellt, gelangt auch die Halterung 74 mit dem Entfernungsmesser 76 in den Innenraum des Korntanks 42, in dem sie durch die - gemeinsam mit dem Befüllrohr 66 in die geschlossene Position verbrachten - Wände 52, 56, 58 und 60 der Korntankabdeckung 50 geschützt angeordnet ist.

## Patentansprüche

1. Korntank (42) für einen Mähdrescher (10) mit einem zwischen einer geschlossenen und geöffneten Position bewegbaren Korntankaufsatz (50), der in der geschlossenen Position den Korntank (42) nach oben hin abdeckt und in der geöffneten Position das nutzbare Volumen des Korntanks (42) nach oben hin erweitert, und mit einem Sensor zur Erfassung des Füllstands im Korntank (42), welcher derart angebracht ist, dass er sich bei geöffnetem Korntankaufsatz (50) in einer zur Erfassung des Füllstands des Füllguts (78) geeigneten Position oberhalb des maximalen Füllstands des Füllguts (78) befindet, während er bei geschlossenem Korntankaufsatz (50) **durch** diesen abgedeckt ist, **dadurch gekennzeichnet, dass** der Sensor ein Entfernungsmesser (76) und an einer Korntankbefülleinrichtung (66) befestigt ist, die zwischen einer ausgefahrenen Position und einer eingefahrenen Position bewegbar ist.

2. Korntank (42) nach Anspruch 1, **dadurch gekennzeichnet, dass** der Entfernungsmesser (76) eingerichtet ist, elektromagnetische, insbesondere optische, Wellen und/oder akustische Wellen auf die Oberfläche im Korntank enthaltenen Füllguts abzusenden, von der Oberfläche des Füllguts reflektierte Wellen zu erfassen und anhand der empfangenen Wellen seine Entfernung von der Oberfläche bzw. den Füllstand des Füllguts (78) zu bestimmen.

## Claims

1. Grain tank (42) for a combine-harvester (10) with a grain-tank cover (50) which can be moved between a closed and an open position and, in the closed position, upwardly covers the grain tank (42) and, in the open position, upwardly expands the usable volume of the grain tank (42), and with a sensor for detecting the level in the grain tank (42), which sensor is fitted in such a manner that, when the grain-tank cover (50) is open, said sensor is located in a position above the maximum filling level of the filling product (78), which position is suitable for detecting the filling level of the filling product (78), while said sensor is covered by the grain-tank cover (50) when the latter is closed, **characterized in that** the sensor is a distance meter (76) and is fastened to a grain-tank filling device (66) which can be moved between an extended position and a retracted position.

2. Grain tank (42) according to Claim 1, **characterized in that** the distance meter (76) is set up to transmit electromagnetic, in particular optical, waves and/or acoustic waves to the surface of the filling product contained in the grain tank, to detect waves reflected from the surface of the filling product and, using the waves received, to determine its distance from the surface or the filling level of the filling product (78).

## Revendications

1. Réservoir à grains (42) pour une moissonneuse-batteuse (10), comportant une partie en surélévation (50), qui est apte à être déplacée entre une position fermée et une position ouverte et qui, dans la position fermée, recouvre le réservoir à grains (42) sur le dessus et, dans la position ouverte, élargit vers le haut le volume utile du réservoir à grains (42), et comportant un capteur destiné à détecter le niveau de remplissage dans le réservoir à grains (42), lequel est disposé de telle sorte que, lorsque la partie en surélévation (50) est ouverte, il se situe dans une position appropriée au-dessus du niveau de remplissage maximum des grains (78) pour détecter le niveau de remplissage des grains (78), alors qu'il est couvert par la partie en surélévation (50) lorsque celle-ci est en position fermée, **caractérisé en ce que** le capteur est un capteur de distance (76) et est fixé sur un dispositif de remplissage du réservoir (66), lequel est apte à se déplacer entre une position extraite et une position rentrée.

2. Réservoir à grains (42) selon la revendication 1, **caractérisé en ce que** le capteur de distance (76) est réalisé pour émettre des ondes électromagnétiques, en particulier optiques, et/ou des ondes acoustiques sur la surface des grains contenus dans le réservoir à grains, pour détecter les ondes réfléchies et pour déterminer, à l'appui des ondes reçues, sa distance par rapport à la surface, plus précisément le niveau de remplissage des grains (78).
